# EUROPÄISCHE PATENTSCHRIFT

(11) **EP 0 561 792 B1**
(45) Veröffentlichungstag und Bekanntmachung des Hinweises auf die Patenterteilung: **19.02.1997**
(21) Anmeldenummer: 91918053.9
(22) Anmeldetag: 16.10.1991
(51) Int. Cl.: G05B 13/02, F02D 41/24, G06F 17/17

(54) **WISSENSBASIERTE STEUER- UND REGELEINRICHTUNG**
KNOWLEDGE-BASED CONTROL AND REGULATION DEVICE
DISPOSITIF DE COMMANDE ET DE REGLAGE A BASE DE CONNAISSANCES

(43) Veröffentlichungstag der Anmeldung: 29.09.1993
(73) Patentinhaber: ABB PATENT GmbH, D-68309 Mannheim (DE)
(72) Erfinder: RÄHDER, Christian, D-8801 Lückendorf (DE); MÜLLER, Jens-Uwe, D-8800 Zittau (DE)
(74) Vertreter: Rupprecht, Klaus, Dipl.-Ing.
(86) Internationale Anmeldenummer: EP9101967
(87) Internationale Veröffentlichungsnummer: WO9308515

(56) Entgegenhaltungen:
- EP-A- 0 424 890
- EP-A- 0 445 729
- WO-A-91/10821
- DE-A- 2 813 519
- FR-A- 2 230 992
- US-A- 4 619 234
- INFORMATION SCIENCES 1985, Elsevier Science Publishing Co., Inc., 1985, New York, M. SUGENO: "An introductory Survey of Fuzzy Control", Seiten 59-83

## Beschreibung

Die Erfindung bezieht sich auf eine Steuer- und Regeleinrichtung, deren Funktionsvorschrift für ihre Arbeitsweise auf der Grundlage von wissensbasierten Steuerregeln gebildet ist.

Die Einrichtung kann zum Steuern, Regeln oder Optimieren technischer Anlagen bzw. Prozesse, beispielsweise eines Kraftwerksprozesses verwendet werden.

Die Funktions- oder Arbeitsweise einer Steuer- und Regeleinrichtung kann auf unterschiedliche Weise erreicht sein, z.B. mit Hilfe eines mathematischen Modells für das statische und/oder dynamische Verhalten des Prozesses oder mit Hilfe einer empirisch ermittelten Struktur und/oder der Parameter. Eine weitere Möglichkeit besteht darin, Steuer- bzw. Stellgrößen für ausgewählte Arbeitspunkte eines Prozesses vorzugeben, indem technologische Kenntnisse bzw. Bedingungen für die Zusammenhänge zwischen den Steuer- bzw. Stellgrößen und den Prozeßeingangsgrößen bzw. Prozeßeigenschaften zugrundegelegt werden. Zu dieser Gruppe gehören die wissensbasierten Steuer- und Regeleinrichtungen, von denen die Erfindung ausgeht.

Solche wissensbasierten Steuer- und Regeleinrichtungen sind bisher nur selten zur Anwendung gelangt. Am bekanntesten dürften Einrichtungen sein, die auf der Fuzzy-Set-Theorie für die Behandlung unscharfer Mengen beruhen. Diese Fuzzy Logic ist z.B. in der Zeitschrift c't 1991, Heft 3, Seite 188 bis 200 beschrieben, wobei auf Seite 199 eine Fuzzy-Regelung beschrieben ist. Fuzzy-Regler sind prinzipiell mittels logischer Operatoren für die Verknüpfung diskret bewerteter Prozeßgrößen entworfen und in ihrem Verhalten etwa den unstetigen Reglern zuzuordnen. Wie der Zeitschrift Automatisierungstechnik at, Heft 2/1985, Seite 45 bis 52, insbesondere Seite 49 zu entnehmen ist, zeigen realisierte Fuzzy-Regler allerdigs meistens nicht ein zufriedenstellendes Verhalten. Weder das Auffinden eines Prozeßmodells im Trial-and-Error-Verfahren wird als zufriedenstellend angesehen, noch haben sich Hoffnungen auf einen lernenden, selbstoptimierenden Regler erfüllt.

Es hat sich gezeigt, daß empirisch entworfene Regler oftmals zwar sicher arbeiten, aber insbesondere dann, wenn der Prozeß eine komplizierte Dynamik oder eine komplexe Struktur besitzt, die Regelgüte nicht befriedigt, indem der Arbeitspunkt nicht genau eingehalten wird, oder durch Schwingungen unangenehme technologische Effekte entstehen. Einbußen an Produktionseffizienz und durch erhöhten Anlagenverschleiß sind die Folge. Sehr aufwendig kann es unter Umständen sein, mittels analytischer Entwurfsmethoden die statischen und dynamischen Eigenschaften eines Prozesses möglichst genau auf das Verhalten einer Steuer- und Regeleinrichtung abzubilden. Der notwendige Umgang mit mathematischen Modellen und Methoden ist für die Anpassung und Änderung von Struktur und Parametern ungünstig. Das reale Prozeßverhalten ist in der Regel nicht hinreichend genau beschreibbar, entstehende Modellungenauigkeiten führen zu statischen und dynamischen Fehlern. Bei komplexen Prozessen kann die Echtzeitfähigkeit unter Umständen nicht befriedigend erreicht werden.

Aus INFORMATION SCIENCES 1985, Elsevier Science Publishing Co., Inc. 1985, New York, M. Sugeno: "An introductory Survey of Fuzzy Control", Seiten 59 bis 83 ist eine Regeleinrichtung bekannt, bei der mittels eines Prozeßmodells eine Steuerungsfunktion für einen Teil des Gesamt-Steuerraums zur Berechnung der Stellgröße bestimmt wird. Eine Änderung der Reglerfunktion erfordert eine Änderung der benutzten Funktionsgleichung, wodurch die Vorteile eines wissensbasierten Reglers verlorengehen.

Ausgehend von den aus der vorgenannten Druckschrift entnehmbaren Merkmalen einer wissensbasierten Steuer- und Regeleinrichtung, liegt der Erfindung die Aufgabe zugrunde, eine solche Einrichtung anzugeben, bei der - ausgehend von bekannten Steuerregeln - in allen Arbeitspunkten eine gute Annäherung an das Prozeßverhalten erzielt wird.

Diese Aufgabe wird bei einer Steuer- und Regeleinrichtung nach dem Oberbegriff des Anspruchs 1 durch dessen kennzeichnende Merkmale gelöst.

Die Steuer- und Regeleinrichtung hat den Vorteil, daß kein mathematisches Modell benötigt wird. Durch Anwendung einfacher Funktionsvorschriften kann eine sehr hohe Abtastfrequenz und damit selbst bei komplizierten Steuerungsaufgaben die Echtzeitfähigkeit erreicht werden.

Besondere Vorteile der erfindungsgemäßen Steuer- und Regeleinrichtung sind zu erwarten, wenn die Anzahl der Eingangsgrößen (Meßwerte, Störgrößen) mindestens 2 beträgt. Durch die Möglichkeit Störgrößen als Eingangsgrößen aufzuschalten, wirken diese permanent auf die Steuergrößen. Es müssen dafür keine besonderen dynamischen Anforderungen berücksichtigt werden.

Die Vorteile eines Fuzzy-Reglers lassen sich nutzen, ohne dessen Nachteile hinnehmen zu müssen. Das heißt, es kann eine günstige Wirkung durch Realisierung einer sogenannten unscharfen Regelung erzielt werden. Dazu werden nach einer vorgeschlagenen Ausgestaltung bestimmten Prozeßzuständen verschiedene Werte als wissensbasierte Steuergrößen zugeordnet.

Anpassungen im Sinne von Trial-and-Error-Methoden sind einfach realisierbar, indem Normierungs- bzw. Denormierungsfunktionen verändert werden oder indem die den Steuerfunktionsvorschriften zugrundegelegten Steuerregeln zur Bildung der Steuergrößen verstellt werden.

Weitere Vorteile und Ausgestaltungsmöglichkeiten ergeben sich aus der nachstehenden Beschreibung der Erfindung anhand von in der Zeichnung dargestellten Ausführungsbeispielen.

Es zeigt:
- Figur 1: Grundmodul einer Steuer- und Regeleinrichtung,
- Figur 2: Beispiel für eine Normierungsfunktion,
- Figur 3: Beispiel für eine Denormierungsfunktion,
- Figur 4: Beispiel für eine 2-wertige Normierungsfunktion,
- Figur 5: eine zweidimensionale Matrix der Steuerregeln, und
- Figur 6: Darstellung der Bildung der Funktionsvorschrift eines Reglers.

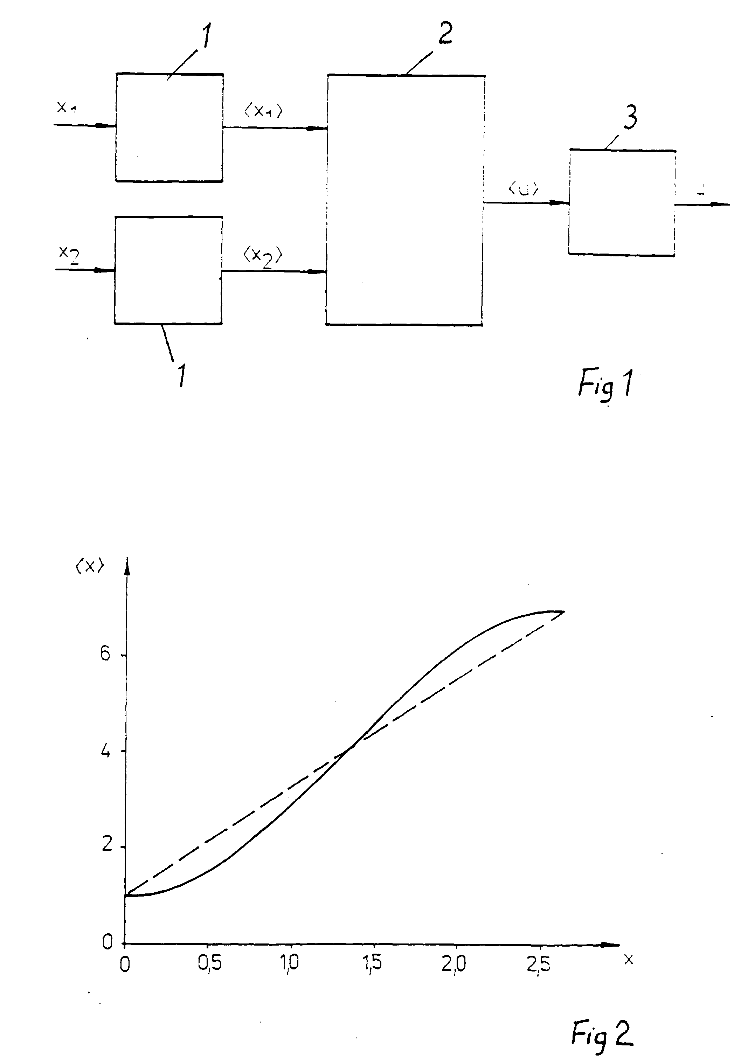

Figur 1 zeigt eine mögliche Struktur der Funktionseinheiten eines Grundmoduls für eine erfindungsgemäße Steuer- und Regeleinrichtung, wobei ein Modul für zwei Eingangsgrößen x₁, x₂ und eine Steuergröße u dargestellt ist. Die Eingangsgrößen x₁, x₂ sind jeweils einer Normierungs-Funktionseinheit 1 zugeführt, die normierte Eingangsgrößen <x₁> bzw. <x₂> an eine Regler-Funktionseinheit 2 weitergibt, die als wissensbasierter analytischer Regler (WAR) bezeichnet werden kann. Die Regler-Funktionseinheit 2 gibt eine normierte Steuer- oder Stellgröße <u> aus, die in einer angeschlossenen Denormierungsfunktionseinheit 3 umgesetzt wird in eine physikalische Stell- oder Steuergröße u.

Es versteht sich, daß einem solchen Grundmodul in bekannter Weise dynamische Korrektionsglieder zur Gewährleistung der Korrelation mehrerer Eingangsgrößen vorgeschaltet sein können. Außerdem können aus mehreren solcher Grundmodule hierarchische Strukturen für multivariable Steuer- und Regelaufgaben gebildet werden.

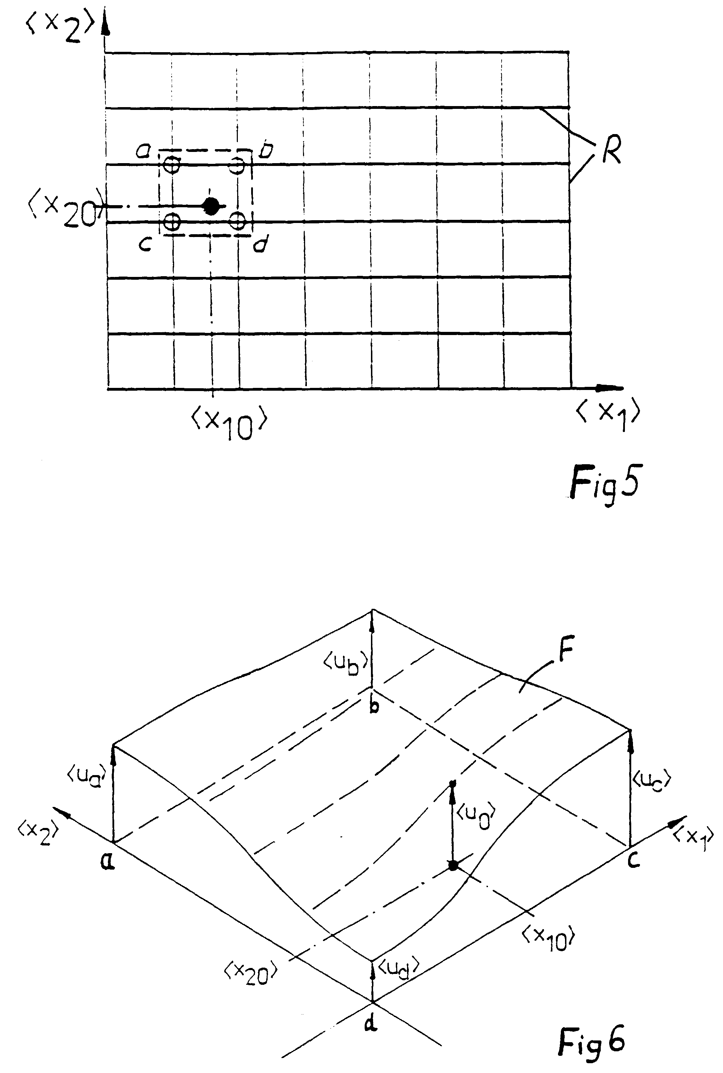

Die Wirkungsweise der Reglerfunktionseinheit 2 wird weiter unten anhand der Figuren 5 und 6 erläutert.

Der Reglerfunktionseinheit 2 könnten anstelle normierter Eingangsgrößen auch direkt die physikalischen Eingangsgrößen zugeführt werden. Eine Normierung, also eine Wichtung bzw. Transformation von Prozeßgrößen ist jedoch zweckmäßig. Normierungsfunktionen können unter anderem benutzt werden zur Sollwerteinstellung für die Regelgröße und für die wirkungsmäßige Wichtung des Einflusses der Prozeßgrößen. Entsprechend ist die Denormierungsfunktion geeignet für die Wirkungsbeeinflussung der Steuergrößen, vergleichbar mit einer Verstärkung. Es wird vorgeschlagen, den Prozeßgrößen, Steuer- und Stellgrößen linguistische Werte bzw. Bildgrößen zuzuordnen.

Figur 2 zeigt eine Kennlinie als Beispiel für eine Normierungsfunktion, also eine Umsetzung einer physikalischen Eingangsgröße x in eine normierte Eingangsgröße <x>.

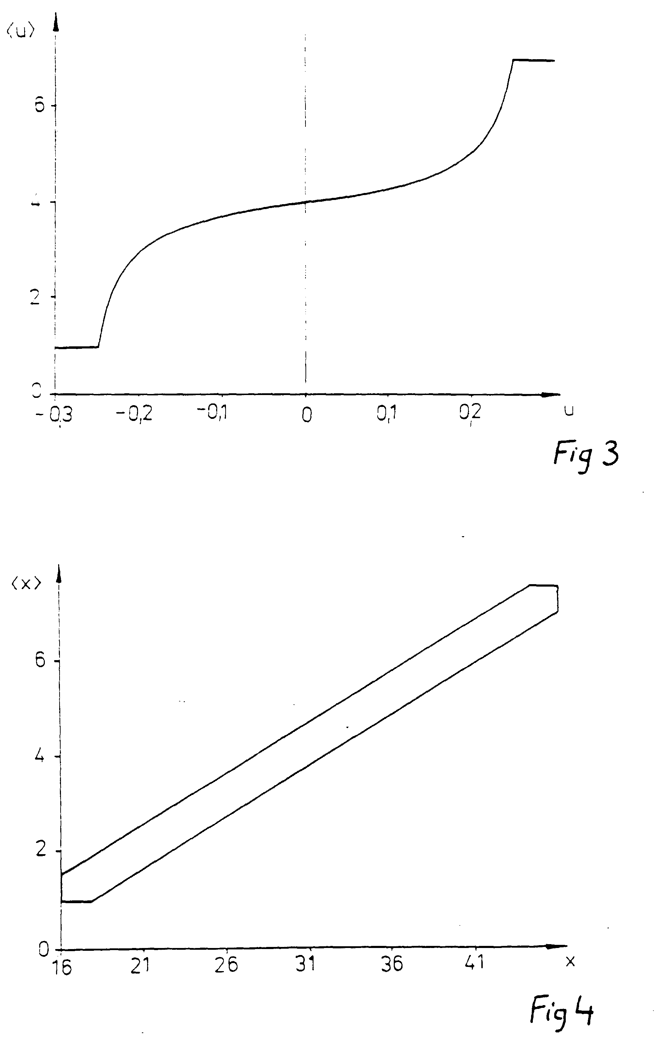

Figur 3 zeigt eine Kennlinie als Beispiel für eine Denormierungsfunktion, wobei eine normierte Steuergröße <u> umgesetzt wird in eine physikalische Steuergröße u.

Die Vorschriften für die Normierung bzw. die Denormierung sind frei wählbar, werden aber im allgemeinen nach technologischen und technischen Anforderungen zu bestimmen sein. Die Normierung kann auch im Sinne einer Fuzzyfizierung mehrwertig sein. Figur 4 zeigt als Beispiel eine Kennlinie für eine 2-wertige Normierungsfunktion.

Die Arbeitsweise der Reglerfunktionseinheit 2 wird nachstehend anhand der Figuren 5 und 6 erläutert, die im Zusammenhang zu betrachten sind.

Figur 5 zeigt eine zweidimensionale Matrix für Steuerregeln, in der normierte Werte der Eingangsgrößen x₁ und x₂ aufgetragen sind. Im gezeigten Beispiel können den Werten der ersten Eingangsgröße x₁ acht linguistische Werten <x₁> zugeordnet sein, und Werten der zweiten Eingangsgröße x₂ können sieben linguistische Werte <x₂> zugeordnet sein. Die in der Matrix (Rasterlinien R) als Schnittpunkt darstellbaren Werte-Kombinationen für normierte Eingangsgrößen <x₁> und <x₂> entsprechen jeweils einem bestimmten Prozeßzustand. Die Zuordnung der Eingangsgrößen x₁ und x₂ kann nach einem wählbaren Schema erfolgen. Geeignet sind z. B. kartesische oder Polar-Koordinatensysteme.

Die Steuer- und Regeleinrichtung muß in der Lage sein, zu jedem Prozeßzustand eine Stellgröße <u> aufgrund von Steuerregeln, d.h. aufgrund einer Steuerfunktion <u> = f[<x₁>;<x₂>] zu bilden. Nun sind aber nicht zu jedem Prozeßzustand die zugehörigen Steuerregeln bekannt, sondern nur zu einigen Prozeßzuständen. Steuerregeln zu einzelnen Prozeßzuständen können z.B. aufgrund von Messungen oder Berechnungen bekannt sein. Beispielsweise können Steuerregeln für Grenzzustände bekannt sein. In Figur 5 ist unterstellt, daß die Steuerregeln zu den mit a, b, c und d bezeichneten Punkten der Matrix bekannt sind (wissensbasierte Steuerregeln). Zu den durch die Punkte a, b, c und d gekennzeichneten Prozeßzuständen sind aufgrund der bekannten Steuerregeln auch die zugehörigen normierten Stellgrößen <uₐ>, <u_{b}>, <u_{c}> und <u_{d}> bekannt (vgl. Figur 6). In Figur 5 ist ein weiterer Prozeßzustand eingetragen, der durch die normierten Eingangsgrößen <x₁₀> und <x₂₀> gekennzeichnet ist und für den die zugehörige Steuergröße <u₀> zu bilden ist. Für diesen Prozeßzustand gibt es die Umgebung der vier bekannten Steuerregeln an den Punkten a bis d.

Figur 6 zeigt als Beispiel eine Steuerraumfunktion für Prozeßzustände im Bereich der Punkte a bis d. In einer Steuerfunktionsfläche sind die zwei normierten Eingangsgrößen <x₁> und <x₂> orthogonal aufgetragen. In der dritten Dimension (Koordinatenrichtung) sind die bekannten normierten Stellgrößen <uₐ> bis <u_{d}> als Pfeile dargestellt. Die an den Punkten a bis d bekannten Steuerregeln sind durch eine mathematische Funktion verknüpft. Durch diese mathematische Funktion ist die gesuchte Steuerregel zur Bildung der Steuergröße <u₀> zum Prozeßzustand entsprechend den Eingangsgrößen x₁₀, x₂₀ festgelegt. In der Zeichnung entspricht die zu bildende Steuergröße <u₀> dem geometrischen Abstand der Steuerfunktionsebene zu dem gebirgsähnlichen Flächengebilde F.

Damit ist erklärt, wie ein wissensbasierter analytischer Regler eine Stell- oder Steuergröße bildet. Die verwendete mathematische Funktion zur Verknüpfung bekannter Steuerregeln ist wählbar. Um Sprünge in den Stell- oder Steuergrößen zu vermeiden, muß die mathematische Funktion stetig sein. Sie könnte linear sein, wird aber im allgemeinen nichtlinear sein und soll angepaßt an die Charakteristik des jeweiligen Prozesses, bzw. an die Charakteristik des jeweiligen Teil-Arbeitsbereiches gewählt werden.

Es wird im allgemeinen nicht zweckmäßig sein, mit einer für den gesamten Arbeitsbereich gültigen Funktionsvorschrift zu arbeiten. Vorgeschlagen wird deshalb eine Unterteilung in Teil-Funktionsvorschriften, die jeweils für einen bestimmten Teil des Prozeß-Arbeitsbereichs gültig sind. Das anhand der Figuren 5 und 6 beschriebene Beispiel könnte somit eine Teil-Funktionsvorschrift betreffen. Die Teil-Funktionsvorschriften werden miteinander verknüpft, wobei an den Verbindungsstellen, d.h. in der näheren Umgebung der durch wissensbasierten Steuerregeln markierten Prozeßzustände, möglichst keine Steuer- oder Stellgrößenänderungen auftreten sollen. Die Teil-Funktionen werden deshalb zweckmäßig so gewählt, daß die Funktionsableitungen nach den Prozeßgrößen an den Verbindungsstellen zu Null werden.

Gemäß einer weiteren Ausgestaltung der in der Steuer- und Regeleinrichtung implementierten Funktionsvorschrift bzw. der Teil-Funktionsvorschriften kann eine Zuordnung der Prozeßgrößen zu mehreren Steuer- und Stellgrößen enthalten sein.

Um einen unscharfen Regler zu realisieren, können für alle oder ausgewählte Steuerregeln verschiedene Werte der Steuergrößen für gleiche Prozeßzustände vorgegeben werden, so daß mehrere Funktionsvorschriften für die Abhängigkeit der Steuergrößen von Prozeßzuständen anwendbar sind. Anders ausgedrückt bedeutet dies, daß eine mehrwertige Bestimmung von Steuergrößen möglich ist, indem mehrfach mit unterschiedlichen Parametern der Funktionsvorschrift gearbeitet wird und die Ergebnisse überlagert werden. Damit lassen sich für einen Prozeßzustand beliebig viele Werte der Steuergrößen bestimmen, durch deren Auswertung und Überlagerung die notwendige eindeutige Steuer- bzw. Stellgröße entsteht.

## Patentansprüche

1. Steuer- und Regeleinrichtung, deren Funktionsvorschrift für ihre Arbeitsweise auf der Grundlage von wissensbasierten Steuerregeln (a bis d) gebildet ist, wobei
- wissensbasierte Steuerregeln (a bis d) punktuell zugeordnete Steuer- bzw. Stellgrößen zu ausgewählten Prozeßzuständen sind, und
- beliebig viele Steuerregeln durch wenigstens eine stetige mathematische Funktion verknüpft sind, mit deren Hilfe Steuer- oder Stellgrößen (u) für beliebige Prozeßzustände als Ausgangsgröße bestimmbar sind, und wobei die mathematische(n) Funktion(en) von einer Anzahl n von untereinander abhängigen oder unabhängigen, einen Prozeßzustand kennzeichnenden Eingangsgrößen (x) des Reglers (2) der Steuer- und Regeleinrichtung bestimmt sind,
dadurch gekennzeichnet, daß
a) durch die n Eingangsgrößen (x, z.B. <x₁>, <x₂>) und die Ausgangsgröße (u) ein (n+1)-dimensionaler Steuerraum gebildet ist, wobei die - orthogonal zueinander stehenden Koordinatenachsen zugeordneten - Eingangsgrößen (x, z.B. <x₁>, <x₂>) die n-dimensionale Grundfläche des Steuerraums bilden,
b) der Steuerraum in Teil-Steuerräume unterteilt ist, indem die Wertebereiche der orthogonal zueinander stehenden Eingangsgrößen (x, z.B. <x₁>, <x₂>) in Abschnitte (durch Rasterlinien R) unterteilt sind, wodurch Teil-Steuerraum-Grundflächen entstehen, die zusammen mit der Stellgröße (u) die Teil-Steuerräume bilden, wobei die mathematische Funktion entsprechend den Teil-Steuerräumen in Teil-Funktionsvorschriften unterteilt ist,
c) die Teil-Steuerraumfunktion dadurch zu einer Bestimmungsgleichung wird, daß ihre Parameter, d.h. Koeffizienten, mittels der einen Arbeitspunkt umgebenden Steuerregeln ermittelt werden, wobei alle wissensbasierte Steuerregeln (a bis d) bekannt sein müssen, und aus dem Prozeßwissen oder mittels eines Näherungsverfahrens aus bekannten Steuerregeln abgeleitet sein können, und
d) die für einen beliebigen Arbeitspunkt - der durch jeweils einen beliebigen Wert jeder Eingangsgröße (x, z.B. <x₁₀>, <x₂₀>) festgelegt ist und sich immer in einem Teil-Steuerraum befindet - zu bestimmende Steuer- oder Stellgröße (u, z.B. <u₀>) durch eine solche Teilsteuerraumfunktion ermittelt wird.

2. Steuer- und Regeleinrichtung nach Anspruch 1, dadurch gekennzeichnet, daß eine nichtlineare mathematische Funktion zur Verknüpfung von Steuerregeln benutzt ist.

3. Steuer- und Regeleinrichtung nach Anspruch 1 oder 2, dadurch gekennzeichnet, daß die Teil-Funktionsvorschriften so gewählt sind, daß an den durch wissensbasierten Steuerregeln markierten Prozeßzuständen keine oder nur geringe Steuer- oder Stellgrößen-Änderungen erzeugt werden, indem die Funktionsableitungen nach den Prozeßgrößen zu Null werden oder an den Übergängen zwischen den Teil-Funktionsvorschriften die links- oder rechtsseitigen Ableitungen gleich groß sind.

4. Steuer- und Regeleinrichtung nach einem der vorstehenden Ansprüche, dadurch gekennzeichnet, daß für den Fall, daß den ausgewählten physikalischen Werten für die Prozeßgrößen, Steuer- und Stellgrößen jeweils linguistische Werte bzw. Bildgrößen zugeordnet sind, diese Zuordnung durch Normierungs- bzw. Denomierungsfunktionen erfolgt.

5. Steuer- und Regeleinrichtung nach einem der vorstehenden Ansprüche, dadurch gekennzeichnet, daß die Funktionsvorschrift bzw. die Teil-Funktionsvorschriften der Steuer- und Regeleinrichtung eine Zuordnung der Prozeßgrößen zu mehreren Steuer- und Stellgrößen enthält.

6. Steuer- und Regeleinrichtung nach einem der vorstehenden Ansprüche, dadurch gekennzeichnet, daß die Anzahl n der Eingangsgrößen mindestens zwei beträgt.

7. Steuer- und Regeleinrichtung nach einem der vorstehenden Ansprüche, dadurch gekennzeichnet, daß eine unscharfe Regelung dadurch erreicht ist, daß für alle oder ausgewählte wissensbasierte Steuerregeln jeweils mehrere verschiedene Werte der Steuer- oder Stellgrößen vorgegeben sind, was bedeutet, daß für ausgewählte Prozeßzustände mehrere Funktionsvorschriften für die Abhängigkeit der Steuer- oder Stellgrößen von Prozeßzuständen zur Anwendung kommen.

8. Steuer- und Regeleinrichtung nach einem der vorstehenden Ansprüche, dadurch gekennzeichnet, daß die Funktionsvorschrift durch mehrere mathematische Funktionen dargestellt ist, wobei die stetige, im allgemeinen nichtlineare Funktionswertänderung durch mehrere einzelne lineare oder nichtlineare Funktionsverläufe ersetzt ist.

## Claims

1. Control and regulation device whose function rule for its mode of operation is formed on the basis of knowledge-based control rules (a to d),
- knowledge-based control rules (a to d) being controlled or manipulated variables assigned point by point to selected process states, and
- an arbitrary number of control rules being interlinked by at least one continuous mathematical function with the aid of which controlled or manipulated variables (u) for arbitrary process states may be determined as output variables, and the mathematical function(s) being determined from a number n of mutually dependent or independent input variables (x) , characterizing a process state, of the controller (2) of the control and regulation device,
characterized in that
a) an (n+1)-dimensional control space is formed by the n input variables (x, e.g. <x₁>, <x₂>) and the output variable (u), the input variables (x, e.g. <x₁>, <x₂>) - assigned to mutually orthogonal coordinate axes - forming the n-dimensional base surface of the control space,
b) the control space is subdivided into control subspaces in that the value ranges of the mutually orthogonal input variables (x, e.g. <x₁>, <x₂>) are subdivided into sections (by grid lines R), as a result of which control subspace base surfaces are produced which, together with the manipulated variable (u), form the control subspaces, the mathematical function being subdivided into part-function rules according to the control subspaces,
c) the control subspace function thereby becomes a condition equation, in that its parameters, i.e. coefficients, are determined by means of the control rules surrounding a working point, all the knowledge-based control rules (a to d) having to be known, and being able to be derived from the process knowledge or by means of an approximation method from known control rules, and
d) the controlled or manipulated variable to be determined for an arbitrary working point (u, e.g. <u₀>) - which is defined in each case by an arbitrary value of each input variable (x, e.g. <x₁₀>, <x₂₀>) and is always located in a control subspace - is determined by means of such a control sub space function.

2. Control and regulation device according to Claim 1, characterized in that a nonlinear mathematical function is used for interlinking control rules.

3. Control and regulation device according to Claim 1 or 2, characterized in that the part-function rules are selected such that no changes or only slight changes to the controlled or manipulated variables are produced in the process states which are marked by knowledge-based control rules, in that the function derivatives with respect to the process variables tend to zero or the left-hand or right-hand derivatives become equally large at the transitions between the part-function rules.

4. Control and regulation device according to one of the preceding claims, characterized in that, for the case in which linguistic values or image variables are in each case assigned to the selected physical values for the process variables, controlled and manipulated variables, this assignment is carried out by normalization or denormalization functions.

5. Control and regulation device according to one of the preceding claims, characterized in that the function rule or part-function rules of the control and regulation device contains an assignment of the process variables to a plurality of controlled and manipulated variables.

6. Control and regulation device according to one of the preceding claims, characterized in that the number n of input variables is at least two.

7. Control and regulation device according to one of the preceding claims, characterized in that fuzzy control is achieved in that for all or selected knowledge-based control rules in each case a plurality of diverse values of the controlled or manipulated variables are prescribed, which means that for selected process states a plurality of function rules are applied for the dependency of the control variables or manipulated variables of process states.

8. Control and regulation device according to one of the preceding claims, characterized in that the function rule is represented by a plurality of mathematical functions, the continuous, generally nonlinear function value change being replaced by a plurality of individual linear or nonlinear function curves.

## Revendications

1. Dispositif de commande et de régulation dont la spécification fonctionnelle pour son mode de travail est établie à partir de lois de commande (a à d) basées sur les connaissances
- les lois de commande (a à d) basées sur des connaissances étant des grandeurs de commande ou de réglage associées ponctuellement à des états de processus donnés
- un nombre quelconque de lois de commande étant chaînés par au moins une fonction mathématique continue, à l'aide de laquelle des grandeurs de commande ou de réglage (u) pour des états de processus quelconque peuvent être déterminées en tant que grandeurs de sortie et
- la/les fonction(s) mathématique(s) étant déterminées par un nombre n de grandeurs d'entrée (x) interdépendantes ou indépendantes du régulateur (2) du dispositif de commande et de régulation, qui caractérisent un état de fonctionnement,
caractérisé par le fait
a) que les n grandeurs d'entrée (x, par exemple <x₁>, <x₂> et la grandeur de sortie (u) définissent un espace de commande à (n+1) dimensions. les grandeurs d'entrée (x, par exemple <x₁>, <x₂>) - associées à des axes de coordonnées mutuellement orthogonaux - formant la surface de base à n dimensions de l'espace de commande,
b) que l'espace de commande est subdivisé en espaces de commande élémentaires par division en secteurs (à l'aide de lignes R) des zones de valeur des grandeurs d'entrée (x, par exemple <x₁>, <x₂>) appartenant à des axes mutuellement orthogonaux et que l'on obtient ainsi des surfaces de base d'espace de commande élémentaire qui, avec la grandeur de réglage (u), forment les espace de commande élémentaires, la fonction mathématique étant subdivisée conformément aux espaces de commande élémentaires en spécifications fonctionnelles élémentaires,
c) que la fonction d'espace de commande élémentaire est transformée en une équation de détermination par la définition de ses paramètres. c'est-à-dire de ses coefficients, à l'aide des lois de commande entourant un point de fonctionnement, toutes les lois de commande (a à d) basées sur les connaissances étant connues ou pouvant être dérivées des connaissances du processus ou de lois de commande connues par un procédé d'approximation et
d) que la grandeur de réglage ou de commande (u, par exemple <u₀>) à déterminer pour un point de fonctionnement donné - qui est fixé par une valeur quelconque de chaque grandeur d'entrée x, par exemple <x₁₀>, <x₂₀>) et est toujours situé dans un espace de commande élémentaire - est calculée à l'aide d'une fonction d'espace de commande élémentaire de ce type.

2. Dispositif de commande et de régulation selon la revendication 1, caractérisé par le fait que l'on utilise une fonction mathématique non linéaire pour chaîner les lois de commande.

3. Dispositif de commande et de régulation selon la revendication 1 ou 2, caractérisé par le fait que les spécifications fonctionnelles élémentaire sont choisies de telle sorte que, pour les états de processus décrits par des lois de commande basées sur les connaissances, il n'y ait pas de modification ou seulement de faibles modifications des grandeurs de commande ou de réglage, les dérivées des fonctions devenant nulles pour les grandeurs de processus ou bien les dérivées à gauche et à droite au niveau des transitions entre les spécifications fonctionnelles élémentaires ayant même valeur.

4. Dispositif de commande et de régulation selon l'une des revendications précédentes, caractérisé par le fait que, lorsque des valeurs linguistiques ou des échelles sont associées aux valeurs physiques pour les grandeurs de processus, l'association est réalisée au moyen de fonctions de normalisation ou de fonction de suppression de la normalisation.

5. Dispositif de commande et de régulation selon l'une des revendications précédentes, caractérisé par le fait que la spécification fonctionnelle ou la spécification fonctionnelle élémentaire du dispositif de commande et de régulation comporte une relation de dépendance entre les grandeurs de processus et plusieurs grandeurs de commande et de réglage.

6. Dispositif de commande et de régulation selon l'une des revendications précédentes, caractérisé par le fait que le nombre n des grandeurs d'entrée est d'au moins deux.

7. Dispositif de commande et de régulation selon l'une des revendications précédentes, caractérisé par le fait que l'on obtient une régulation floue par le fait que, pour toutes ou seulement pour certaines lois de commande, on donne chaque fois plusieurs valeurs de grandeur de commande ou de réglage, c'est-à-dire que pour des états de processus donnés, plusieurs spécifications fonctionnelles sont appliquées pour la relation entre les grandeurs de commande ou de réglage et les états de processus.

8. Dispositif de commande et de régulation selon l'une des revendications précédentes, caractérisé par le fait que la spécification fonctionnelle est décrite par plusieurs fonctions mathématiques, la variation continue en général non linéaire de la valeur de la fonction étant remplacée par plusieurs courbes individuelles linéaires ou non linéaires.
